# EUROPEAN PATENT SPECIFICATION

(11) **EP 1 467 633 B1**
(45) Date of publication and mention of the grant of the patent: **12.12.2007**
(21) Application number: 02790685.8
(22) Date of filing: 29.10.2002
(51) Int. Cl.: A23L 3/18, A23L 1/216, A23L 1/212

(54) **METHOD FOR STERILISING FOOD PRODUCTS BY INJECTED STEAM, IN PARTICULAR PUREES AND/OR CONCENTRATES**
DURCH DAMPFINJEKTION STERILISIERUNGSVERFAHREN FÜR NAHRUNGSMITTEL WIE PÜREE UND/ODER KONZENTRATE
PROCEDE PERMETTANT LA STERILISATION DE PRODUITS ALIMENTAIRES PAR INJECTION DE VAPEUR, EN PARTICULIER POUR PUREES ET/OU CONCENTRES

(30) Priority: 24.01.2002 IT PR20020001
(43) Date of publication of application: 20.10.2004
(73) Proprietor: CFT S.p.A., 43100 Parma (IT)
(72) Inventor: ARELLI, Pierluigi, I-43100 Parma (IT); LUSARDI, Roberto, I-43100 Parma (IT); PACIELLO, Gerardo, I-85010 Pignola (IT)
(74) Representative: Gotra, Stefano
(86) International application number: PCT/IT2002/000690
(87) International publication number: WO 2003/061408

(56) References cited:
- EP-A- 0 403 137
- EP-A- 0 780 056
- DE-C- 19 902 610
- GB-A- 264 278
- GB-A- 1 550 434
- US-A- 5 906 853

## Description

### TECHNICAL FIELD AND BACKGROUND ART.

The present invention relates to a method for sterilising food products, in particular purees and/or concentrates, of the type comprising a step of heating the product by injecting steam at predetermined steam and a step of mixing the product, to allow a uniform distribution of the steam and consequently a heating that is as homogeneous as possible.

Currently, such a type of method is particularly adopted in the food sector of the manufacture of juices and/or concentrates of fruit and/or vegetables, such as tomatoes.

A first known method provides for the heating to take place by means of a pair of coaxial conduits. In particular, the smaller-diameter conduit; within which flows the product to be heated, is externally lapped by a heating fluid that flows in the larger-diameter conduit.

A heating operated according to said procedures has the drawback of heating effectively only the mass of product that is in direct contact with the walls of the inner conduit that are lapped by the heating fluid. Therefore, the mass of product that is substantially in correspondence with the centreline of the inner conduit undergoes an insufficient heating to assure the sterility of the product In accordance with a second known method, the product is heated by injecting hot steam into it. While this method does allow for better heating than the first method, it nonetheless has the drawback of not assuring temperature stability within the product.

In particular, areas of products with insufficient temperature may be created, thereby compromising the asepsis of the final product. It is not possible to obtain a uniform distribution of the steam inside the product due to the different physical state of the steam and of the product itself, normally respectively gaseous and liquid.

To overcome this drawback, the product is heated to a higher temperature than the one actually required to guarantee sterilisation, so that, even in the presence of temperature variations, the temperature of the product never drops below a minimum value that guarantees its asepsis. However, overheating entails the additional problem of deteriorating the quality of the product, changing its chemical-physical characteristics, such as taste, viscosity and/or consistency.

According to a third known method, the product is made to advance inside a conduit having, on its outer lateral walls, a plurality of recesses whereto correspond an equal number of projections on the inner lateral walls, which thus are undulated. During its advance inside the conduit, the product is heated by injection of hot steam and, by effect of the turbulence generated by the undulation of the inner walls of the conduit, the product undergoes a mixing that should favour a uniform distribution of the steam and consequently a homogeneous heating.

The method described above has the important drawback of being sensitive to the mass flow rate of the product. In particular, a different mass flow rate from the one for which the conduit was dimensioned influences the turbulence generated by the inner walls of the conduit and therefore does not allow a uniform distribution of the steam, favouring temperature variations.

An additional drawback, therefore, is represented by the impossibility of throttling the plant, without compromising the asepsis of the product at the end of the treatment.

A method for sterilizing food products by injection of steam and mixing the heated product by means of a dynamic mixer is known from EP-A-0780056.

### DISCLOSURE OF INVENTION.

An aim of the present invention is to eliminate the aforesaid drawbacks making available a method for sterilising food products, in particular purees and/or concentrates, which allows uniformly to heat the product to be treated, without any deterioration of its quality.

An additional aim of the present invention is to propose a sterilising method that allows to throttle the plant, without compromising the asepsis of the final product.

Another aim of the present invention is make available a method that allows a chemical-physical homogenisation of the product, drastically reducing its degradation.

A further aim of the present invention is to propose a sterilisation method that is simple and economical to implement.

Said aims are fully achieved by the method for sterilising food products, in particular purees and/or concentrates, of the present invention, which is characterised by the content of the claims set out below.

### BRIEF DESCRIPTION OF DRAWINGS.

This and other characteristics shall become more readily apparent from the following description of a preferred embodiment of the method illustrated, purely by way ofnon limiting example, in the accompanying drawing tables, in which:
- Figure 1 shows a portion of an embodiment of a plant for sterilising food product that implements a method according to the invention;
- Figure 2 shows a partially sectioned lateral view of a first constructive detail of the plant of Figure 1;
- Figure 3 shows a partially sectioned axonometric view of a second constructive detail of the plant of Figure 1.

### BEST MODE FOR CARRYING OUT THE INVENTION.

The method of the invention is of the type comprising at least a step of heating the product by injecting steam at predetermined temperature; in particular, the steam must be sufficiently hot to guarantee the asepsis of the product at the end of the treatment.

The method comprises at least a step of mixing the product, in order to enable a uniform distribution of the steam and consequently an equal heating of the product itself.

Said mixing step originally takes place by means of at least a dynamic mixer.

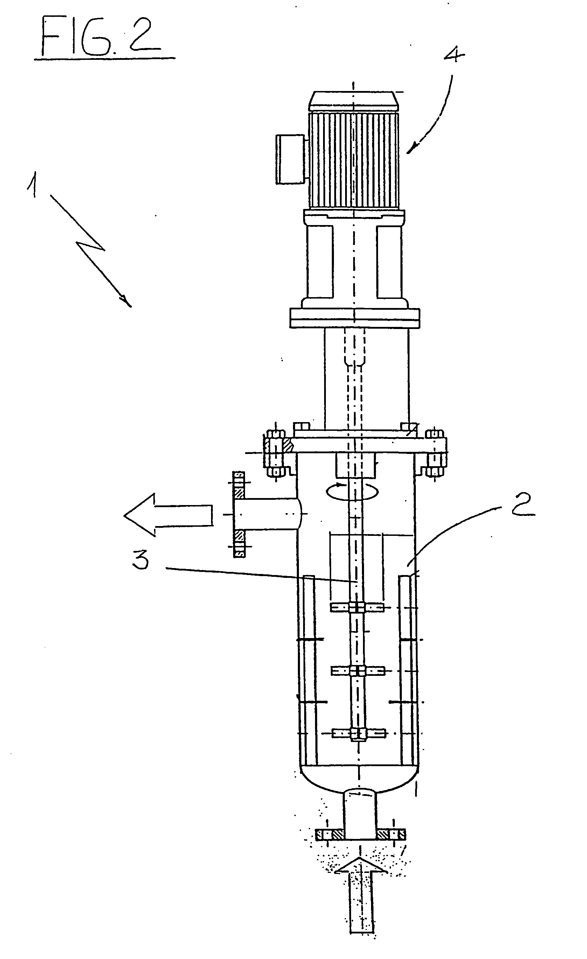

Figure 2 shows, purely by way of example, a possible embodiment of a dynamic mixer able to carry out the aforesaid mixing step in accordance with the method.

With reference to Figure 2, the dynamic mixer is globally indicated with the number 1 and comprises a tank 2 for collecting the product, typically food puree or concentrate, an agitator 3 inserted in the tank to mix the product to be sterilised and means 4 for actuating the agitator. In particular, said means preferably comprise an electric motor.

The method also comprises a step of mixing the product by means of at least a static mixer.

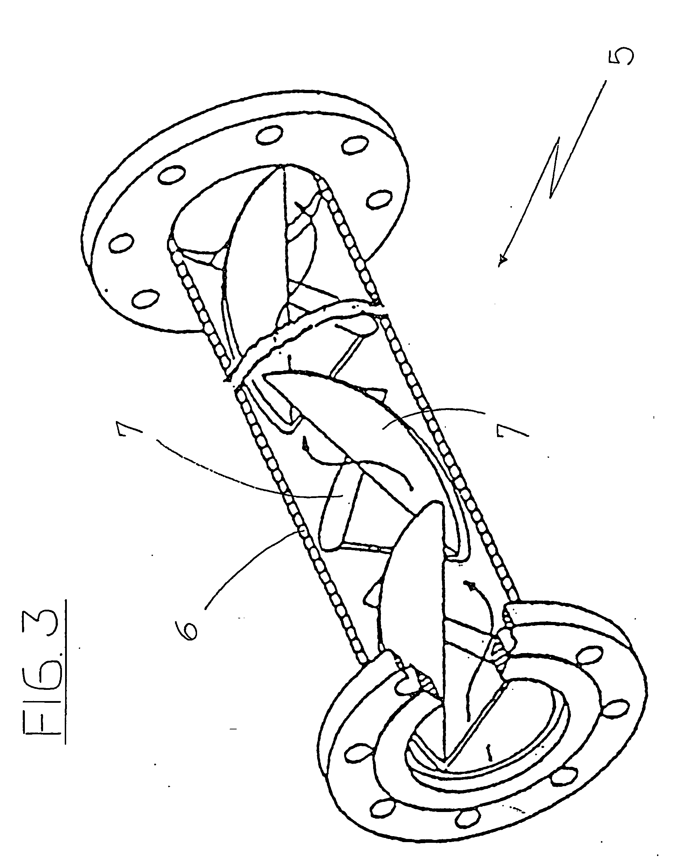

Figure 3 shows, purely by way of example, a possible embodiment ofa static mixer able to carry out the aforesaid mixing step in accordance with the method.

With reference to Figure 3, the static mixer is globally indicated with the number 5 and comprises a tubular body 6 inside which flows the product, typically food puree or concentrate, a plurality of fixed baffles 7, positioned inside the tubular body and so shaped as to operate continuous deviations of the product and separation of the threads, to allow its mixing by effect of the turbulence that develops.

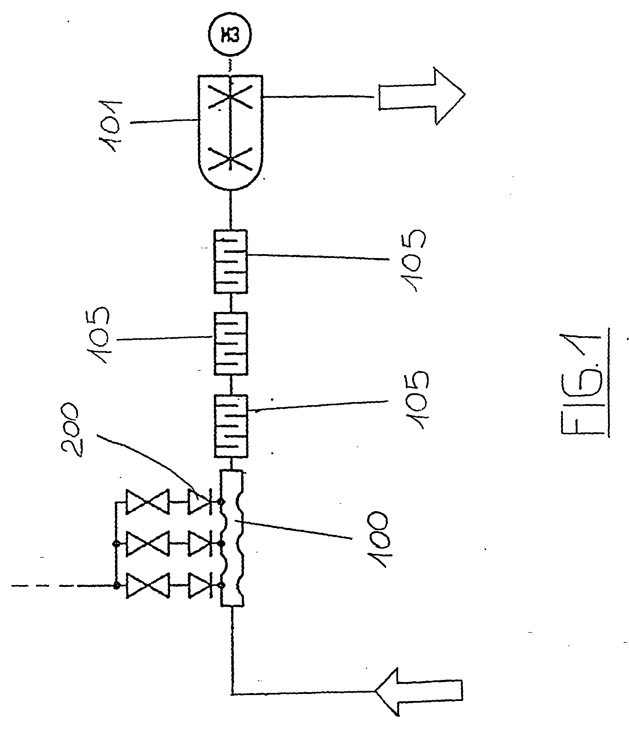

Figure 1 shows a possible embodiment of the method according to the invention.

The product flows inside a conduit 100, which has undulated inner walls in accordance with the prior art and is provided with a plurality of steam injectors 200.

Subsequently, the heated product flows inside one or more static mixers 105, which perform a first coarse mixing to uniform the temperature of the product.

Thereafter, the pre-mixed product reaches a dynamic mixer 101 which performs a fine mixing, uniforming the temperature of the product and assuring its sterilisation.

The method of the invention achieves important advantages.

First of all, such a method allows to heat the product in uniform fashion, assuring temperature stability and guaranteeing asepsis. In particular, the use of a dynamic mixer allows a chemical-physical homogenisation of the product, drastically reducing its degradation and safeguarding the organoleptic characteristics such as taste and colour, or the physical characteristics, such as viscosity and consistency.

Secondly, a mixing step carried out by means of dynamic mixers allows to throttle the plant, without compromising a uniform temperature distribution inside the product and thus guaranteeing the asepsis of the final product.

Advantageously, said method is simple and economical to implement and can be used to sterilise even products with high viscosity.

Another advantage is represented by the fact that, given the presence of dynamic mixers, the static mixers and the undulated conduits into which the steam is injected can have reduced length, since the turbulence created by them in the product is not the sole source of mixing action. Thanks to conduits of reduced length, therefore, it is possible to reduce head losses inside the plant, achieving considerable energy savings and lower pressures.

## Claims

1. Method for sterilising food products, in particular purees and/or concentrates, comprising the distinct and subsequent steps of:
- heating the product by injection of steam at predetermined temperature to ensure the asepsis of the product;
- mixing the product through at least a static mixer (105) to allow a substantially uniform distribution of the steam;
- mixing the product in a dynamic mixer (101) which performs a fine mixing, the static and dynamic mixing performing an equal heating of the product uniforming the temperature of the product and ensuring its sterilisation.

2. Method as claimed in claim 1, **characterised in that** the dynamic mixer comprises:
at least a tank for collecting the product;
at least an agitator associated with the tank and operatively active on the product to mix it;
means for actuating the agitator.

3. Method as claimed in claim 1, **characterised in that** the static mixer comprises:
at least a tubular body within which the product flows;
a plurality of fixed baffles, positioned inside the tubular body and so shaped as to operate continuous deviations of the product, to allow its mixing.

## Patentansprüche

1. Sterilisierungsverfahren für Nahrungsmittel, insbesondere Püree und/oder Konzentrate umfassend folgende eigenständige, aufeinanderfolgende Schritte:
- Erhitzen des Produktes durch Dampfinjektion auf eine vorbestimmte Temperatur, um die Keimfreiheit des Produktes zu gewährleisten;
- Vermischen des Produktes durch mindestens einen statischen Mixer (105), um eine im wesentlichen gleichförmige Verteilung des Dampfes zu ermöglichen;
- Vermischen des Produktes in einem dynamischen, eine feine Vermischung hervorrufenden Mixer (101), wobei durch das statische und dynamische Vermischen eine gleichmässige Erhitzung des Produktes hervorgerufen wird, so dass dessen Temperatur vergleichmässigt und seine Sterilisierung gewährleistet wird.

2. Verfahren nach Anspruch 1, **dadurch gekennzeichnet, dass** der dynamische Mixer umfasst:
mindestens einen Behälter zur Aufnahme des Produktes;
mindestens ein dem Behälter zugeordnetes Rührwerk, das zur Vermischung des Produktes auf dasselbe einwirkt;
Mittel zum Antreiben des Rührwerkes.

3. Verfahren nach Anspruch 1, **dadurch gekennzeichnet, dass** der statische Mixer umfasst:
mindestes einen rohrförmigen Körper, in dem das Produkt fliesst;
eine Vielzahl feststehender Ablenkbleche, die im Inneren des rohrförmigen Körpers angeordnet und
derart ausgebildet sind, dass sie ein kontinuierliches Ablenken des Produktes bewirken, um dessen Vermischen zu ermöglichen.

## Revendications

1. Procédé permettant la stérilisation de produits alimentaires, en particulier des purées et/ou concentrés, comprenant les phases distinctes et successives suivantes:
- réchauffage du produit par injection de vapeur à une température prédéterminée pour assurer l'asepsie du produit;
- mélange du produit par l'intermédiaire d'au moins un mélangeur statique (105) pour permettre une distribution substantiellement uniforme de la vapeur;
- mélange du produit dans un mélangeur dynamique (101) réalisant un mélange fin, les mélanges dynamiques et statiques effectuant un réchauffage égal du produit en uniformisant la température du produit et en assurant sa stérilisation.

2. Procédé selon la revendication 1, **caractérisé en ce que** le mélangeur dynamique comprend:
au moins un réservoir pour collecter le produit;
au moins un agitateur associé au réservoir et opérationnellement actif sur le produit pour le mélanger;
des moyens pour actionner l'agitateur.

3. Procédé selon la revendication 1, **caractérisé en ce que** le mélangeur statique comprend:
au moins un corps tubulaire à l'intérieur duquel le produit s'écoule;
une pluralité de déflecteurs fixes, positionnés à l'intérieur du corps tubulaire et conformés de manière à effectuer des déviations continues sur le produit, afin de permettre son mélange.
